# EUROPÄISCHE PATENTSCHRIFT

(11) **EP 0 779 440 B1**
(45) Veröffentlichungstag und Bekanntmachung des Hinweises auf die Patenterteilung: **09.02.2000**
(21) Anmeldenummer: 96118861.2
(22) Anmeldetag: 26.11.1996
(51) Int. Cl.: F16B 23/00, F16B 31/02

(54) **Ablassschraube für einen Blechbehälter**
Drain bolt for a sheet metal container
Boulon de drainage pour un récipient en tôle

(30) Priorität: 14.12.1995 DE 19546739
(43) Veröffentlichungstag der Anmeldung: 18.06.1997
(73) Patentinhaber: Ford Global Technologies, Inc., Dearborn, Michigan 48126-2490 (US)
(72) Erfinder: Premiski, Vladimir, 53909 Zuelpich-Buervenich (DE); Bertram, Ulrich, 50129 Bergheim (DE)
(74) Vertreter: Messulam, Alec Moses

(56) Entgegenhaltungen:
- DE-A- 1 500 869
- GB-A- 2 261 483
- US-A- 3 865 007
- US-A- 4 149 434

## Beschreibung

Die Erfindung bezieht sich auf eine Ablaßschraube für einen Blechbehälter zur Aufnahme in einem in der Blechwand ausgebildeten Befestigungsgewinde geringer Länge gemäß Oberbegriff des Anspruchs 1. Bei Blechbehältern, die Flüssigkeiten enthalten, die nur selten bei der Wartung abgelassen und erneuert werden müssen, werden oft unmittelbar in der Blechwand Befestigungsgewinde ausgebildet, die infolge der geringen Dicke der Blechwand nur in einer geringen Länge zur Verfügung stehen.

Bei diesen Befestigungsgewinden mit geringer Länge besteht stets die Gefahr, daß bei einem Anziehen der Ablaßschraube ein zu hohes Anzugsdrehmoment aufgebracht wird und das Befestigungsgewinde ausreißt. In einem solchen Fall muß dann normalerweise der gesamte Blechbehälter ersetzt werden oder es muß in aufwendiger Arbeit eine neue Reparaturhülse mit einem Befestigungsgewinde eingesetzt werden.

Bei Blechbehältern mit einer bestimmten geringen Dicke der Blechwand ist es auch bereits bekannt, im Bereich der Ablaßöffnung einen hülsenförmigen Durchzug vorzusehen, in der dann das Befestigungsgewinde mit einer größeren Länge als die Dicke der Blechwand ausgebildet werden kann. Solche, meist nach innen in den Blechbehälter vorragenden durchgezogenen Hülsenansätze bedingen jedoch eine entsprechende Freiheit im Inneren des Blechbehälters.

Bei einem hydrokinetischen Drehmomentwandler umfaßt ein Blechbauteil, das auch als Mantelbauteil bezeichnet wird, die im Inneren umlaufenden Pumpen- und Turbinenräder und dementsprechend muß zum Mantelbauteil ein gewisser Freiheitsgrad vorhanden sein.

Zum Befüllen des hydrokinetischen Drehmomentwandlers mit der Hydraulikflüssigkeit ist eine Einfüllöffnung erforderlich, die durch eine Ablaßschraube verschlossen werden muß. Normalerweise wird ein hydrokinetischer Drehmomentwandler auf Lebensdauer mit der Hydraulikflüssigkeit gefüllt, d.h., nur in Sonderfällen, bei Reklamationen oder außergewöhnlichen Störungen im automatischen Getriebe muß ein Austausch der Hydraulikflüssigkeit erfolgen. Dementsprechend handelt es sich hier um eine Ablaßschraube, die zwar erforderlich ist, die jedoch nicht in einer Vielzahl von Wartungsterminen betätigt werden muß.

Da die Blechwand des Mantelbauteiles nur ein Befestigungsgewinde mit geringer Länge zur Verfügung stellt, ist es immer wieder vorgekommen, daß durch Aufbringen eines zu hohen Anzugsdrehmomentes das Befestigungsgewinde zerstört wird, wodurch das ganze teure Bauteil des hydrokinetischen Drehmomentwandlers ersetzt oder aufwendig repariert werden mußte.

Die Aufgabe der Erfindung ist es daher, eine Ablaßschraube für einen Blechbehälter der im Oberbegriff des Patentanspruches 1 erläuterten Art derart zu verbessern, daß eine Beschädigung des Befestigungsgewindes im Blechbehälter zuverlässig vermieden wird und ein Ersatz der Ablaßschraube auch später immer wieder möglich ist.

Gemäß der Erfindung wird diese Aufgabe gelöst, indem eine Ablaßschraube für einen Blechbehälter, der im Oberbegriff des Patentanspruches 1 erläuterten Art die im Kennzeichenteil des Patentanspruches aufgezeigten Merkmale aufweist.

Dadurch, daß die erste Betätigungsausnehnehmung von so geringer Tiefe ist, daß ein Aufbringen eines das Befestigungsgewinde zerstörenden Drehmomentes durch vorheriges Zerstören der Betätigungsausnehmung nicht möglich ist und die im Grunde der ersten Betätigungsausnehmung vorgesehene zweite Ausnehmung, ein Entfernen der beschädigte Ablaßschraube erleichtert, kann einer Beschädigung des teuren Bauteiles vorgebeugt werden. Die erste Betätigungsausnehmung kann hierbei ein Innensechskant oder eine Torxausnehmung sein und die zweite Ausnehmung ist eine angepaßte Bohrung für einen bekannten Schraubenausdreher.

Durch das Überdrehen der ersten Betätigungsausnehmung wird zusammen mit der zweiten Ausnehmung ein rundes Loch geschaffen, welches zur Aufnahme eines Schraubenausdrehers geeignet ist, wodurch ein Entfernen der beschädigten Ablaßschraube möglich ist, ohne daß die Gefahr der Wiederverwendung des beschädigten Teiles besteht.

Aus der DE-OS 15 00 869 ist eine Allzweckschraube und ein zu ihrer Betätigung dienender Schraubenzieher bekannt, bei der am Grunde einer ersten Betätigungsausnehmung eine zweite Ausnehmung vorgesehen ist, diese zweite Ausnehmung ist jedoch in erster Linie als eine Zentrierausnehmung ausgebildet und dient zum Ausrichten des Betätigungswerkzeuges.

Die US-A-3 865 007 beschreibt eine Schraube mit Drehmomentbegrenzenden Vorsprüngen in einer Werkzeugausnehmung. Die Zerstörung dieser Vorsprünge durch ein Werkzeug, macht den Zugang zu einer zweiten Werkzeugausnehmung frei.

Die Erfindung wird anhand eines in der Zeichnung gezeigten Ausführungsbeispieles näher erläutert. Es zeigt:
- Fig. 1: eine Ansicht des unteren Teiles eines hydrokinetischen Drehmomentwandlers mit im Schnitt dargestellter Anordnung der Ablaßschraube im Mantelbauteil und
- Fig. 2: einen vergrößerten Schnitt durch eine erfindungsgemäße Ablaßschraube in Einbaulage.

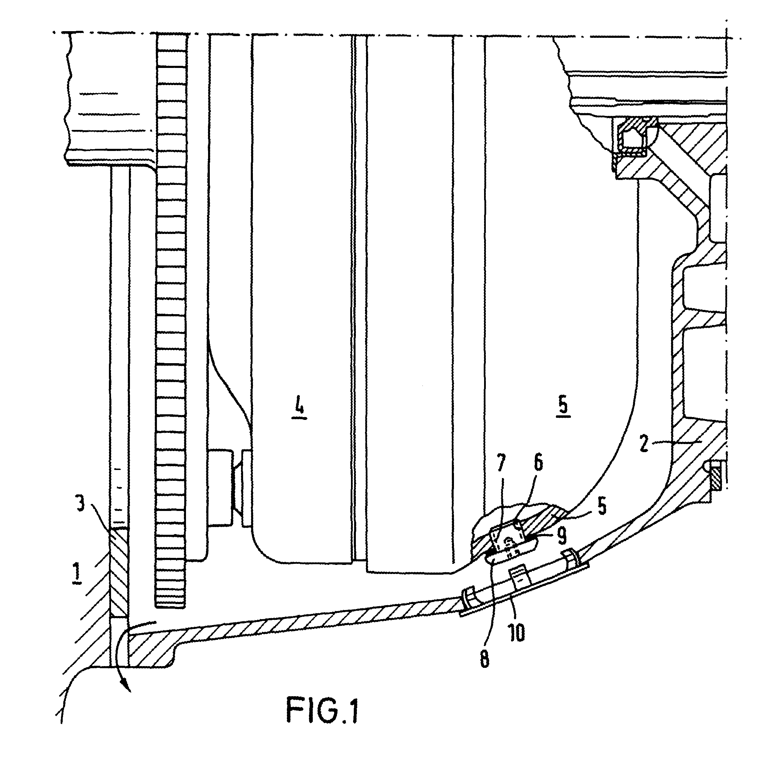

In Fig. 1 ist zwischen einem Antriebsmotor 1 und einem automatischen Getriebe 2, das über eine Zwischenplatte 3 mit dem Antriebsmotor 1 verbunden ist, ein hydrokinetischer Drehmomomentwandler 4 angeordnet, der das Eingangselement eines automatischen Getriebes für ein Kraftfahrzeug bildet. In einem Blechbehälter, der das sogenannte Mantelbauteil 5 des Drehmomentwandlers 4 bildet, ist eine Ablaßöffnung 6 vorgesehen, in die ein Befestigungsgewinde 7 von geringer Länge eingebracht ist. Die Ablaßöffnung 6 wird mittels einer Ablaßschraube 8 verschlossen und über eine Dichtung 9 abgedichtet. In dem den hydrokinetischen Drehmomentwandler umfassenden Teil des Getriebegehäuses ist eine durch einen Kunststoffclip 10 verschlossene Öffnung vorgesehen, über die ein Zugang zur Ablaßschraube möglich ist.

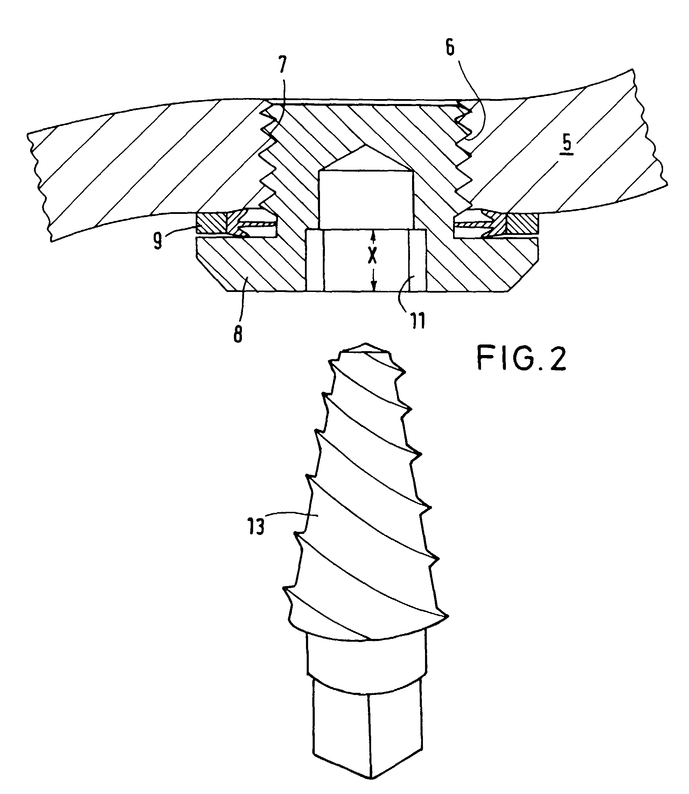

Wie aus der in Fig. 2 gezeigten vergrößerten Darstellung der Ablaßschraube 8 ersichtlich ist, wird die Ablaßschraube 8 in die Blechwand 5 im Befestigungsgewinde 7 eingeschraubt und nimmt zwischen ihrem Schraubenkopf eine Dichtungsscheibe 9 auf. Im Schraubenkopf der Ablaßschraube 8 ist eine erste Betätigungsausnehmung 11 in Form eines Innensechskants oder einer Torxausnehmung angeordnet, deren Länge x so gering gehalten ist, daß das Aufbringen eines Anzugsdrehmomentes, das zur Zerstörung des Befestigungsgewindes 7 führen würde, nicht möglich ist, weil vorher es zu einer Zerstörung der Betätigungsausnehmung 11 kommt.

Durch das Überdrehen der Betätigungsausnehmung 11 in Form eines Innensechskantes oder einer Torxausnehmung wird eine runde Bohrung geschaffen, die zusammen mit der zweiten Ausnehmung eine Aufnahme für einen Schraubenausdreher 13 bildet. Dadurch ist ein Entfernen der Ablaßschraube möglich, ohne daß die Gefahr der Wiederverwendung des beschädigten Teiles besteht.

War es also bei der Montage der Ablaßschraube zu einer Beschädigung der Betätigungsausnehmung 11 gekommen, so kann doch für den Fall, daß ein Austausch der Hydraulikflüssigkeit im Drehmomentwandler infolge eines Störfalles erforderlich wird, mittels eines bekannten Schraubenausdrehers die Ablaßschraube entfernt werden. Es muß dementsprechend nur eine neue Ablaßschraube eingesetzt werden und die Gefahr, daß das wesentlich teurere Bauteil des hydrokinetischen Drehmomentwandlers beschädigt wird, wird sicher vermieden.

## Patentansprüche

1. Ablaßschraube (8) für einen Blechbehälter (4) mit zur Aufnahme in einem in der Blechwand (5) ausgebildeten Befestigungsgewinde (7) geringer Länge, die Ablaßschraube weist einer erste Betätigungsausnehmung (11) für ein Werkzeug auf, wobei im Grund dieser Ausnehmung eine zweite Ausnehmung (12) vorgesehen ist,
**dadurch gekennzeichnet,** daß
- die erste Betätigungsausnehmung (11) von so geringer Tiefe (x) ist, daß ein Aufbringen eines das Befestigungsgewinde (7) zerstörenden Drehmoments durch vorheriges Zerstören der Betätigungsausnehmung (11) nicht möglich ist und
- die im Grunde der ersten Betätigungsausnehmung (11) vorgesehene zweite Ausnehmung (12), zusammen mit der zerstörten ersten Betätigungsausnehmung (11) einen bekannten Schraubenausdreher zum Entfernen der beschädigten Ablaßschraube (8) aufnehmen kann.

2. Ablaßschraube nach Anspruch 1,
**dadurch gekennzeichnet**, daß
- die erste Betätigungsausnehmung (11) ein Innensechskant oder eine Torxausnehmung ist und die zweite Ausnehmung (12) eine angepaßte Bohrung für einen bekannten Schraubenausdreher (13) ist.

## Claims

1. Drain bolt (8) for a sheet metal container (4) with short length for holding in a fastening thread (7) formed in the sheet wall (5), the drain bolt having a first actuating recess (11) for a tool, whereby a second recess (12) is provided in the base of this recess,
**characterised in that**
- the first actuating recess (11) is of such a small depth (x) that applying a torque which would destroy the fastening thread (7) is not possible since the actuating recess (11) is first destroyed and
- the second recess (12) provided in the base of the first actuating recess (11), together with the destroyed first actuating recess (11), can accept a known stud extractor for removing the damaged drain bolt (8).

2. Drain bolt according to Claim 1,
**characterised in that**
- the first actuating recess (11) is a hexagon socket or Torx recess and the second recess (12) is a bore hole suitable for a known stud extractor (13).

## Revendications

1. Vis de vidange (8) pour un récipient en tôle (4) présentant, pour la réception de la vis, un filetage de fixation (7) de faible longueur réalisé dans la paroi de tôle (5), la vis de vidange présentant un premier creux d'actionnement (11) pour un outil et un second creux (12) étant prévu dans le fond de ce premier creux,
caractérisée en ce que
- le premier creux d'actionnement (11) possède une si faible profondeur (x) que l'application d'un couple détruisant le filetage de fixation (7) n'est pas possible parce que le creux d'actionnement (11) est détruit avant, et
- le second creux (12), prévu dans le fond du premier creux d'actionnement (11), est capable, ensemble avec le premier creux d'actionnement (11) détruit, de recevoir un extracteur de vis connu pour enlever la vis de vidange (8) endommagée.

2. Vis de vidange selon la revendication 1, caractérisée en ce que le premier creux d'actionnement (11) est un creux à six pans ou un creux "Torx" et le second creux (12) est un perçage adapté pour un extracteur de vis (13) connu.
